(19) Europäisches Patentamt
European Patent Office
Office européen des brevets

(11) **EP 4 175 281 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(21) Anmeldenummer: **21206065.1**

(22) Anmeldetag: **02.11.2021**

(51) Internationale Patentklassifikation (IPC):
*H04N 23/611* (2023.01)       *H04N 23/69* (2023.01)
*H04M 1/27475* (2020.01)      *H04M 1/72454* (2021.01)

(52) Gemeinsame Patentklassifikation (CPC):
**H04N 23/611; H04M 1/72454; H04N 23/69;**
H04M 1/2755; H04M 2250/52

(54) **VERFAHREN UND VORRICHTUNG ZUM HERSTELLEN EINES KOMMUNIKATIONSKANALS**

METHOD AND DEVICE FOR PRODUCING A COMMUNICATION CHANNEL

PROCÉDÉ ET DISPOSITIF D'ÉTABLISSEMENT D'UN CANAL DE COMMUNICATION

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**03.05.2023   Patentblatt 2023/18**

(73) Patentinhaber: **Kiessig, Rene
04277 Leipzig (DE)**

(72) Erfinder: **Kiessig, Rene
04277 Leipzig (DE)**

(74) Vertreter: **Reich, Jochen
Herrnstraße 15
80539 München (DE)**

(56) Entgegenhaltungen:
EP-A1- 3 125 155            KR-B1- 101 474 422
US-A1- 2010 173 678      US-A1- 2020 252 541
US-B1- 10 498 968

**Beschreibung**

Die vorliegende Erfindung betrifft ein Verfahren zur Konfiguration eines mobilen Endgeräts eines Benutzers bei einer semi-automatisierten Einrichtung eines Kommunikationskanals. Mittels des vorgeschlagenen Verfahrens ist es möglich in Abhängigkeit von Hardwareparametern wie Bildschirmgröße und Kameraauflösung Kommunikationspartner mit geringem technischem Aufwand vorauszuwählen und einen Kommunikationskanal herzustellen. Der technische Aufwand bzgl. Rechenkapazität, Speicherumfang und Speicherperformanz werden wird derart gegenüber bekannter Verfahren verringert, dass die vorgeschlagene Erfindung zum Beispiel auf einem Smartphone zur Ausführung gebracht werden kann. Die Erfindung ist ferner gerichtet auf eine entsprechend eingerichtete Vorrichtung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

DE 10 2015 214 744 B4 zeigt ein Head-up-Display-System, umfassend eine Anzeigeeinheit, welche eine Projektionseinheit umfasst, die so konfiguriert ist, dass sie an eine Frontscheibe angrenzend angeordnet werden kann, wobei die Anzeigeeinheit weiter einen Anzeigebildschirm und ein Steuerelement umfasst.

DE 11 2014 005 165 T5 bezieht sich auf Ebenen in Rundumansichten, die Leistung einer interaktiven digitalen Medienrepräsentation mit multiplen Ansichten umfassen.

US 2010/ 0173678 A1 zeigt ein Verfahren zur Bilderkennung bei dem eine zeitliche Verzögerung vorgesehen ist. Hierbei wird ein Vorschaubild erzeugt.

Aus dem Stand der Technik sind Überwachungssysteme bekannt, welche beispielsweise Großveranstaltungen derart überwachen, dass Kameras auf bestimmte Bereiche, zum Beispiel eines Gebäudes, ausgerichtet sind. Hierbei werden Kameras an der Decke so angebracht, dass sie den zu überwachenden Bereich einsehen können. Somit wird also im Stand der Technik unabhängig von der Anzahl der Personen ein bestimmter Bereich überwacht, egal, wie viele Personen sich hier gerade befinden. Dieser uneingeschränkte Personenkreis liefert größere Datenmengen, wobei zugrunde gelegt wird, dass ausreichend Rechenkapazitäten zur Verfügung stehen. Gerade bei mobilen Endgeräten stehen diese Rechenkapazitäten typischerweise nicht zur Verfügung.

Der Stand der Technik sieht ferner vor, dass die Überwachungskameras typischerweise selbst keine Datenverarbeitung vornehmen, sondern vielmehr die erfassten Bilddaten an eine entfernt angerichtete Recheneinheit übermitteln. Diese Recheneinheit umfasst typischerweise umfangreiche Hardwarekapazitäten. So werden Daten an mindestens einen Server übermittelt, der die Datenverarbeitung übernimmt. Insofern sind Überwachungskameras typischerweise passive Bildgeber, die entsprechend ihrem Blickwinkel Bilddaten liefern. Aktive Steuerungseinheiten sind zu diesen Kameras entfernt angeordnet und so kann beispielsweise ein Überwachungspersonal einen Blickwinkel und einen Zoomfaktor der Kamera manuell eingeben, was sodann entfernt umgesetzt wird. Der Stand der Technik zeigt also kein Erfassung und Verarbeitung von Daten in einem einzigen mobilen Endgerät. Der Personenkreis ist hier typischerweise nicht eingeschränkt, sondern viele Personen werden erfasst. Es werden immer diejenigen Personen bzw. Objekte erfasst, die sich gerade im Blickwinkel der Kamera befinden.

Weiter aus dem Stand der Technik ist es bekannt, aus einer Vielzahl von Objekten auf einem Bild einzelne Personen bzw. Objekte zu identifizieren. So können beispielsweise Personen in einer Datenbank hinterlegt werden. Von diesen Personen wird ein Foto angefertigt und sodann erfolgt ein Abgleich dieses Fotos mit der erfassten Datenmenge. Bei einer Übereinstimmung kann sodann eine Information ausgegeben werden, dass sich diese Person an einem bestimmten Ort befindet.

Weiter ist es aus dem Stand der Technik bekannt, eine Gesichtserkennung derart durchzuführen, dass auf einem Bild Gesichter erkannt werden, ohne dass diese vorab in einer Datenbank hinterlegt sind. Dies ist aus gängigen Smartphones bekannt, die auf einem Foto ein Gesicht mit einem Rechteck versehen. Auf diese Art und Weise ist es möglich, innerhalb eines Bildes die Anzahl der Personen zu bestimmen.

Weiter ist es aus dem Stand der Technik bekannt, bei einem autonomen Fahren eine Kamera vorausschauend auf die Straße zu richten und sodann eine Objekterkennung durchzuführen. Hierbei ist es möglich, Verkehrsschilder auszulesen und auch derart zu interpretieren, dass beispielsweise eine Geschwindigkeitsbegrenzung ausgelesen werden kann. Typischerweise befinden sich in einem Sichtfeld einer Kamera eines Autos nur wenige Verkehrsschilder, so dass es hier nicht zu Problemen bezüglich der zugrunde liegenden Hardware kommt. Diese Bildinformationen werden innerhalb des Autos ausgewertet und das technische Problem der übermäßigen Datenmengen ergibt sich somit gar nicht. Dieses Szenario schlägt typischerweise ebenfalls eine passive Kamera vor, welche lediglich die Verkehrsschilder erfasst und sodann werden diese Verkehrsschilder interpretiert.

Der Stand der Technik hat das Problem, dass innerhalb einer Bildquelle potentiell hohe Anzahlen von zu erkennenden Personen bzw. Objekten vorliegen können. Gerade bei mobilen Endgeräten sind die Hardwarekapazitäten begrenzt und oftmals ist eben auch die Bandbreite begrenzt. Somit besteht im Stand der Technik der Nachteil, dass umfangreiche Bilddaten oftmals nicht an einen entfernt ausgelagerten Server übermittelt werden können. Werden hingegen die Daten in dem mobilen Endgerät selbst verarbeitet, so benötigt dies umfangreiche Hardwarekapazitäten. Hardwarekapazitäten beziehen sich hierbei insbesondere auf die Prozessorleistung und den Umfang und die Geschwindigkeit des Speichers.

Darüber hinaus ist ein Problem im Stand der Technik, dass die Akkuleistung stark beansprucht wird und gerade bei umfangreichen Bilddaten kann es innerhalb des Endgeräts zu einer Erwärmung und einer Reduzierung der Batterielaufzeit kommen.

Die vorgenannten Probleme verschärfen sich dahingehend, dass typischerweise bei einer Bildverarbeitung eine Echtzeitanforderung besteht, d.h. also, dass aus subjektiver Sicht des Benutzers eine sofortige Verarbeitung stattfinden muss. Gerade bei einem Bewegen einer Kamera entstehen viele Bilddaten, welche sodann sofort verarbeitet werden müssen.

Dementsprechend ist es eine Aufgabe der vorliegenden Erfindung ein Verfahren vorzuschlagen, welches es ermöglicht, dass ein Benutzer in Echtzeit auf seinem mobilen Endgerät Personen bzw. Objekte anzeigen lassen kann, mit denen er mit geringem technischen Aufwand in Verbindung treten kann. Hierbei ist es eine Aufgabe, dass die Hardwareanforderungen derart niedrig sind, dass sich sogar ein mobiles Endgerät hierzu eignet. Ferner ist es eine Aufgabe der vorliegenden Erfindung eine entsprechend eingerichtete Vorrichtung bereitzustellen. Ferner soll ein Computerprogrammprodukt bereitgestellt werden, welches Steuerbefehle vorhält, welche das Verfahren implementieren beziehungsweise die vorgeschlagene Vorrichtung betreiben.

Die Aufgabe wird durch ein Verfahren mit den Merkmalen gemäß Patentanspruch 1 und durch eine Vorrichtung zur Konfiguration eines mobilen Endgeräts eines Benutzers bei einer semi-automatisierten Einrichtung eines Kommunikationskanals gemäß Anspruch 12 gelöst. Weitere vorteilhafte Ausgestaltungen sind in den Unteransprüchen angegeben.

Dementsprechend wird ein Verfahren zur Konfiguration eines mobilen Endgeräts eines Benutzers bei einer semi-automatisierten Einrichtung eines Kommunikationskanals vorgeschlagen, aufweisend ein stetiges Auslesen mindestens eines bildgebenden Sensors zum Erfassen einer Mehrzahl potentieller Kommunikationspartner, wobei in Abhängigkeit einer voreingestellten Anzahl potentieller Kommunikationspartner der Zoomfaktor eines bildgebenden Sensors, ein Vergrößerungsfaktor bzw. ein Brennwert mindestens eines Sensors der bildgebenden Sensoren eingestellt wird; ein Freischalten einer Auswahl an Kommunikationspartnern mittels einer bereitgestellten Registrierungsinformation; und ein Einrichten eines Kommunikationskanals aus einer vordefinierten Mehrzahl an Kommunikationskanälen zu einem Endgerät des Kommunikationspartners gemäß einer hinterlegten Endgerätekennung bzw. Benutzer ID eines freigeschalteten Kommunikationspartners in Abhängigkeit einer Benutzereingabe des mobilen Endgeräts des Benutzers.

Der Vergrößerungsfaktor kann physisch an der Kamera eingestellt werden oder aber auch programmtechnisch simuliert werden. Weist die Hardware nicht über ein entsprechendes Objektiv auf, so kann auch virtuell ein Bildschirmausschnitt gewählt werden, der gezoomt d.h. vergrößert wird. Auch kann eine einfache Digitalkamera ohne Zoom - Objektiv bzw. eine Kamera ohne entsprechendem Objektiv derart betrieben werden, dass diese in normalen Betrieb nur einen Bildausschnitt verwendet. Somit kann auch virtuell der Bildschirmausschnitt vergrößert werden. Somit kann das Anpassen des Zoomfaktors bzw. Vergrößerungsfaktor auch programmtechnisch erreicht werden. Ein Anpassen des Vergrößerungsfaktors ist also je nach Anwendung ein Vergrößern oder ein Verkleinern des Bildausschnitts.

Das vorgeschlagene Verfahren konfiguriert das mobile Endgerät derart, dass die Kamera bzw. der bildgebende Sensor eingestellt wird. Bei dem mobilen Endgerät handelt es sich beispielsweise um ein Smartphone eines Benutzers der bei der Einrichtung eines Kommunikationskanals unterstützt wird. Dies erfolgt semiautomatisiert, da der Benutzer nicht aus einer vorgegebenen Liste, wie zum Beispiel einem Telefonbuch, auswählen muss, sondern vielmehr hält der Benutzer sein Endgerät in eine Menschenmenge und richtet somit auch die Kamera aus. Dem Benutzer werden sodann potentielle Kommunikationspartner angezeigt und er kann diese Kommunikationspartner dann einzelnen auswählen. Beispielsweise richtet der Benutzer seine Kamera auf eine Menschengruppe von 20 Personen aus. Hierbei ist es möglich, dass alle 20 Benutzer für den zu Grunde liegenden Service registriert sind. Sind lediglich 15 Benutzer für den vorgeschlagenen Dienst registriert, so erfolgt ein Einstellen des Vergrößerungsfaktors bzw. der Brennweite bzw.eines Zooms derart, dass die voreingestellte Anzahl potentieller Kommunikationspartner alleine, d.h. ausschließlich, angezeigt wird. Hat der Benutzer eingegeben, dass er fünf potentielle Kommunikationspartner sehen will, so wird der Zoom derart eingestellt, dass auf dem Bildschirm des Smartphones lediglich fünf Personen angezeigt werden. Diese fünf Personen können bei dem zugrunde liegenden Dienst registriert werden oder nicht. Potentiell können also fünf Personen eine Registrierungsinformation hinterlegt haben oder aber auch zum Beispiel drei Personen. Bei den registrierten Personen innerhalb der Gruppe von fünf Personen wird sodann angezeigt, mit welchen Kommunikationspartner man Kontakt aufnehmen kann. Aus den potentiellen Kommunikationspartnern werden sodann tatsächliche Kommunikationspartner, in dem der Benutzer einen tatsächlichen Kommunikationspartner auswählt.

Beispielsweise werden dem Benutzer innerhalb des herangezoomten Bildes drei potentielle Kommunikationspartner angezeigt und die Gesichter werden mittels eines Rechtecks dargestellt. Befinden sich auf dem Bild fünf Personen, sind jedoch nur drei registriert, so werden dem Benutzer insgesamt drei Rechtecke auf Gesichtern des jeweiligen potentiellen Kommunikationspartners angezeigt. Der Benutzer tippt sodann auf ein Rechteck und ein Kommunikationskanal wird eingerichtet bzw. hergestellt.

Damit die Personen erfasst werden, erfolgt ein stetiges Auslesen mindestens eines bildgebenden Sensors zum Erfassen einer Mehrzahl potentieller Kommunikationspartner. Die Kamera des mobilen Endgeräts wird also aktiviert und erfasst stetig ein Bild. Hierbei ist es auch möglich mehrere Kameras zu verwenden, deren Bild kombiniert wird. Mittels einer Bilderkennung kann sodann festgestellt werden, wie viele Personen bzw. Objekte sich auf dem jeweiligen Bild befinden. Der Benutzer richtet die Kamera aus und erfasst somit unterschiedliche Anzahlen von Kommunikationspartnern. Diese sind in diesem Schritt noch potentielle Kommunikationspartner. Das Bild der Kamera ist also eine stetige Abfolge von Einzelbildern, die analysiert wird.

Vorab hat der Benutzer eine Anzahl potentieller Kommunikationspartner hinterlegt und genau diese Anzahl wird sodann angezeigt. Hierzu stellt das vorgeschlagene Verfahren selbsttätig, den Vergrößerungsfaktor, die Brennweite bzw. den Zoom des bildgebenden Sensors ein.

Konkret ist es also möglich, dass der Benutzer fünf potentielle Kommunikationspartner vorab spezifiziert hat, wobei der Benutzer lediglich die Anzahl spezifiziert. Hält der Benutzer nunmehr seine Kamera auf eine Personengruppe von zehn Personen, so wird das Bild derart angepasst, dass sich lediglich nur noch fünf Personen in dem Bild befinden. Aufgrund der Abmessungen eines Bildschirms eines Smartphones ist es typischerweise nicht möglich die Zahl der potentiellen Kommunikationspartner höher als zehn zu setzen. Da die einzelnen Kommunikationspartner zur Auswahl angezeigt werden und beispielsweise ein Viereck um diese Gesichter gelegt wird, ist die Anzahl der potentiellen Kommunikationspartner stark begrenzt.

Erfindungsgemäß hat sich gezeigt, dass sich zum Einsatz im vorliegenden Verfahren eine Zahl potentieller Kommunikationspartner von 3 bis 10 eignet. Diese können derart angezeigt werden, dass für den Benutzer tatsächlich das Gesicht erkennbar ist, die Personen also identifizierbar sind, und trotzdem mittels einer manuellen Eingabe die Personen bzw. Kommunikationspartner ausgewählt werden können. Typischerweise tippt der Benutzer auf den Bildschirm und wählt somit den Kommunikationspartner aus, was ab einer Anzahl von über zehn Personen nicht mehr möglich ist.

Somit wird also bei der Ansteuerung der Kamera bzw. des einen oder der mehreren Sensoren die Bildschirmabmessung bevorzugt mit berücksichtigt mitberücksichtigt.

Wird die Anzahl potentieller Kommunikationspartner angezeigt und bewegt der Benutzer sein mobiles Endgerät, so wird wieder in den Schritt des stetigen Auslesens verzweigt und es erfolgt erneut ein Einstellen des Bildausschnitts bzw. des Zoom - Faktors, des Vergrößerungsfaktors bzw. der Brennweite. Werden beispielsweise nur drei anstatt der gewünschten fünf potentiellen Kommunikationspartner angezeigt, so wird herausgezoomt, bis eine Anzahl von fünf potentiellen Kommunikationspartnern angezeigt wird.

Sodann erfolgt ein Freischalten einer Auswahl an Kommunikationspartnern mittels einer bereitgestellten Registrierungsinformation. Werden beispielsweise fünf Leute als potentielle Kommunikationspartner angezeigt, haben sich jedoch nur drei Personen für den zu Grunde liegenden Dienst registriert, so werden eben nur diese drei Personen freigeschaltet. Ein Freischalten heißt hierbei ein Aktivieren zur Erstellung eines Kommunikationskanals. Mit diesen freigeschalteten Personen bzw. Objekten kann also ein Kommunikationskanal hergestellt werden. Auch ist es möglich, dass die Anzahl potentieller Kommunikationspartner derart beschränkt wird, dass nur freigeschaltete, also registrierte Personen bzw. Objekte, angezeigt werden. Werden beispielsweise fünf Kommunikationspartner angezeigt, es haben sich jedoch nur drei Personen registriert, so wird der Zoomfaktor derart eingestellt, dass sich mindestens fünf freigeschaltete bzw. registrierte Kommunikationspartner in dem zu verarbeitenden Bild befinden.

Die Registrierungsinformation kann derart bereitgestellt werden, dass auf einem entfernten Server Benutzerdaten hinterlegt werden, welche angeben, welche Person bzw. welches Objekt kontaktiert werden will. Hierzu können auch Kontaktinformationen hinterlegt werden. So kann sich ein Benutzer mit einem Foto registrieren und kann sodann eine Adresse zur Einstellung eines Videokanals hinterlegen. Wird nunmehr mittels Gesichtserkennung die Person in dem zu verarbeitenden Bild erkannt, so kann angezeigt werden, dass ein Videokanal aufgebaut werden kann.

Der potentielle Kommunikationspartner kann somit hinterlegen, welchen Kommunikationskanal er nutzen möchte. Beispielsweise kann auch eine Telefonnummer hinterlegt werden oder alternativ ein Textdienst, der genutzt wird. Dem Benutzer, welcher das vorgeschlagene Verfahren ausführt, wird dann angezeigt, dass mit einem potentiellen Kommunikationspartner ein Telefonat oder ein Textgespräch, bzw. Chat, möglich ist. Bei dem potentiellen Kommunikationspartner kann es sich um eine Person handeln, welche sodann mittels ihres hinterlegten Endgeräts angesprochen wird.

Das vorgeschlagene Verfahren bezieht sich generell auf menschliche Benutzer, die mit einer technischen Einrichtung kommunizieren. Beispielsweise kann ein Benutzer in einem Auto unterwegs sein und die Kamera erfasst eine bestimmte Anzahl an Nummernschildern. Das vorgeschlagene Verfahren stellt sodann die Kamera derart ein, dass eine bestimmte Anzahl an Nummernschildern sichtbar ist. Der Benutzer, hier der Fahrer, wird sodann auf einem Bildschirm dasjenige Nummernschild aus, mit dessen Fahrer er kommunizieren möchte. Ist beispielsweise ein erster Fahrer und ein zweiter Fahrer mit dem vorgeschlagenen Verfahren registriert, so ist es möglich, dass die Fahrer auf der Autobahn miteinander derart Kontakt aufnehmen, dass der erste Fahrer in seinem Head-up-Display fünf weitere Fahrer angezeigt bekommt. Dieser Abgleich kann mittels einer Bilderkennung des Nummernschilds erfolgen. Sodann tätigt der erste Fahrer eine Spracheingabe und wählt den angezeigten potentiellen Kommunikationspartner aus. Dieser potentielle Kommunikationspartner wird dann der tatsächliche Kommunikationspartner, in dem ein Kommunikationskanal mit diesem Fahrer bereitgestellt wird.

Die Registrierungsinformation kann auch Merkmale über den potentiellen Kommunikationspartner aufweisen. Beispielsweise können mittels der Registrierungsinformation Daten über den Kommunikationspartner eingegeben werden. So sind mögliche Teile der Registrierungsinformation eine Ortskennung eines potentiellen Kommunikationspartners. Somit kann jemand angeben, dass er kontaktiert werden will, aber nur von Personen, die ein Nummernschild aufweisen, das der eigenen Stadt entspricht. Die Registrierungsinformation kann also eine Information beinhalten, dass der Fahrer nur mit Personen aus einer bestimmten Stadt kommunizieren will. Der entsprechende Dienst ist beliebig zu erweitern und beispielsweise können Fahrer auch einstellen, dass ihnen nur potentielle Kommunikationspartner mit einem bestimmten Beziehungsstatus angezeigt werden. Auf diese Art und Weise ist es technisch einfach mit anderen Personen in Kontakt zu treten, auch wenn nur ein begrenzter Bildschirmplatz zur Verfügung steht. Durch die Einstellung der bildgebenden Sensoren wird sichergestellt, dass nur potentielle Kommunikationspartner bis zu einer gewissen Anzahl eingeblendet werden.

Besonders vorteilhaft ist hierbei, dass die möglichen Kommunikationspartner automatisiert erkannt werden und sodann eben auch automatisiert die Kamera eingestellt werden kann. Somit erfolgt also ein Anzeigen potentieller Kommunikationspartnern völlig ohne Eingabe des Benutzers. Dieser muss lediglich sein Mobilfunkgerät entsprechend ausrichten und sodann wird ihm ein geeignetes Bild mit Kommunikationspartnern angezeigt. Lediglich die Auswahl, mit welchem potentiellen Kommunikationspartner der Benutzer in Verbindung treten will ob liegt letztendlich dem Benutzer.

Gemäß einem Aspekt der vorliegenden Erfindung werden mehrere bildgebende Sensoren ausgelesen und deren Bilder werden auf einer Wiedergabeeinheit kombiniert ausgegeben. Dies hat den Vorteil, dass eine perspektivische Darstellung angezeigt werden kann bzw. eine dreidimensionale Darstellung. Auf diese Art und Weise kann die Kommunikationspartner räumlich angeordnet werden und es ergibt sich ein räumliches Bild. Darüber hinaus können weitere Informationen in das Bild eingebracht werden, wie zum Beispiel Zusatzinformationen zu den Kommunikationspartnern und eine Markierung der Kommunikationspartner. Typischerweise haben aktuelle Mobilfunkgeräte und Autos mehrere Kameras, welche sodann kombiniert werden können.

Gemäß einem weiteren Aspekt der vorliegenden Erfindung erfolgt das Erfassen der Kommunikationspartner in Abhängigkeit einer hinterlegten Registrierungsinformation, einer hinterlegten Bildinformation, in Abhängigkeit eines ausgelesenen Positionssensors, in Abhängigkeit eines Höhenmessers und/oder in Abhängigkeit eines Luftdrucksensors. Dies hat den Vorteil, dass nur diejenigen Kommunikationspartner erreicht werden können, welche auch mittels der Registrierungsinformation registriert sind. Sodann kann mittels Gesichtserkennung bzw. Pattern Matching eine Bildinformation mit dem tatsächlichen Bild der Kamera verglichen werden und so kann ein Benutzer identifiziert werden. Darüber hinaus ist es auch möglich, eine Position anzugeben, an der sich der Kommunikationspartner befindet. Hierbei sollen räumliche Einschränkungen durchgeführt werden, die beispielsweise einen Umkreis definieren. Die geographische Position des Benutzers kann auch mittels eines Höhenmessers und eines Luftdrucksensors erfolgen, wobei der Luftdrucksensor wiederum eine Information bezüglich der Höhe darstellt. Somit ist es beispielsweise möglich geographische Regionen einzuschränken, in denen sich die Kommunikationspartner befinden. Beispielsweise können nur Kommunikationspartner im Umkreis von 15 Meter oder einem größeren Bereich relevant sein.

Gemäß der vorliegenden Erfindung wird die voreingestellte Anzahl potentieller Kommunikationspartner in Abhängigkeit einer Auflösung und einer prozentualen Bildschirmbelegung der Wiedergabeeinheit relativ spezifiziert. Dies hat den Vorteil, dass pro Auflösung des mobilen Endgeräts angegeben werden kann, wie viele Kommunikationspartner anzuzeigen sind. Dies ermöglicht es, dass genug Fläche bleibt, um den Kommunikationspartner derart anzuzeigen, dass der Benutzer ihn auch tatsächlich identifizieren und auswählen kann. So kann eine Liste erstellt werden, welche unterschiedliche mögliche Auflösungen des Bildschirms und/oder der Kamera anzeigt und sodann wird jeder Auflösung ein Wert zugeordnet, welche die Anzahl potentieller Kommunikationspartner beschreibt. Beispielsweise können bei einer Standardauflösung des Bildschirms fünf Kommunikationspartner angezeigt werden. Ist die Auflösung höher, so kann auch eine Anzahl von sieben Konditionspartnern möglich sein. Somit wird die Kamera derart eingestellt, dass sie auch den Bildschirm berücksichtigt und sodann wird immer eine geeignete Anzahl an Kommunikationspartner angezeigt. Die prozentuale Bildschirmbelegung kann auch derart definiert werden, dass beispielsweise angegeben wird, dass 15 % des Bildschirms für einen Kommunikationspartner reserviert werden. Da nach 90 % keine 15 % mehr möglich sind, wird eben nur 90 % der Bildschirmbelegung genutzt und es werden sechs Kommunikationspartner angezeigt. Es können auch 20 % der Bildschirmbelegung definiert werden und so werden auf dem gesamten Bildschirm lediglich fünf Kommunikationspartner angezeigt. Die Kamera wird derart eingestellt, dass die Brennweite bzw. der Zoom genau diese Anzahl an Kommunikationspartnern erfasst.

Gemäß einem weiteren Aspekt der vorliegenden Erfindung wird die Anzahl potentieller Kommunikationspartner mit einer Auswahl aus 3-10 eingestellt. Dies hat den Vorteil, dass bei typischen Bildschirmabmessungen eines Smartphones eine Anzahl an Kommunikationspartnern angezeigt werden kann, die es dem Benutzer erlaubt, diese zu identifizieren und entsprechend mittels einer Touchscreen-Eingabe auszuwählen. Überraschenderweise wurde erfindungsgemäß herausgefunden, dass dies bei gängigen Kamerakonfigurationen und Bildschirmen eine geeignete Anzahl ist um einen Kommunikationspartner auszuwählen. Empirisch wurde ermittelt, dass bei einer Anzahl über zehn dargestellten Kommunikationspartnern die Anzeige unübersichtlich wird und dass es technisch nicht mehr möglich ist, mittels eines Touchscreens und einer Fingereingabe treffsicher einen Kommunikationspartner auszuwählen.

Gemäß einem weiteren Aspekt der vorliegenden Erfindung wird der Vergrößerungsfaktor bzw. Zoomfaktor derart eingestellt, dass die ausgelesenen potentiellen Kommunikationspartner genau der Anzahl der voreingestellten Anzahl potentieller Kommunikationspartner entsprechen. Dies hat den Vorteil, dass die Kamera bezüglich des Zooms so eingestellt wird, dass das erfasste Bild verkleinert bzw. vergrößert wird, solange bis die vorgegebene Anzahl an Kommunikationspartner in dem Bild vorhanden ist. Somit wird also die Kamera selbsttätig eingestellt.

Gemäß einem weiteren Aspekt der vorliegenden Erfindung weist eine Registrierungsinformation mindestens ein Bild, mindestens ein Muster, eine Information eines Nummernschilds, ein Gesichtsmerkmal, biometrische Daten und/oder mindestens eine visuelle Benutzererkennung auf. Dies hat den Vorteil, dass ein Abgleich der vorhandenen Kommunikationspartner mit einem hinterlegten Bild erfolgen kann. Bei einer ausreichenden Übereinstimmung wird sodann angenommen, dass sich die Person auf dem hinterlegten Bild tatsächlich in dem erfassten Echtzeitbild befindet. Handelt es sich bei einem Kommunikationspartner nicht um einen Menschen, so kann auch ein Muster hinterlegt werden, welches mittels Bilderkennung besonders einfach erfasst werden kann. Auch können Teile oder ein komplettes Nummernschild optisch hinterlegt werden, so dass hierzu ein Auto als Kommunikationspartner ausgewählt werden kann. Möchte man beispielsweise einen Warnhinweis übersenden, so kann ein Fahrer als Registrierungsinformation textuell seine Nummernschildinformation eingeben und sodann können weitere Fahrer genau dieses Auto auswählen und der Fahrer dieses Autos erhält einen Warnhinweis auf seinem Display.

Gemäß am weiteren Aspekt der vorliegenden Erfindung umfasst die Mehrzahl an Kommunikationskanälen einen Audiokanal, einen Videokanal und/oder einen textuellen Kommunikationskanal. Dies hat den Vorteil, dass der Benutzer aus mehreren Formaten auswählen kann und somit den geeigneten Kommunikationskanal einstellen kann. Bei einem Kommunikationskanal kann es sich um ein textuelles Gespräch, also einen Chat, oder einen audiovisuellen Nachrichtenaustausch handeln.

Gemäß einem weiteren Aspekt der vorliegenden Erfindung umfasst die Endgerätekennung bzw. Benutzerkennung eine Adresse, eine Telefonnummer, , Kontaktdaten und/oder eine alphanumerische Zeichenkette. Dies hat den Vorteil, dass das Endgerät auf unterschiedliche Art und Weise angesprochen werden kann und zudem können auch unterschiedliche Endgerätekennungen vorliegen. So kann neben einer Telefonnummer auch eine Adresse für eine Videokommunikation hinterlegt werden. Der Benutzer kann sodann auswählen, wie der Kommunikationskanal zustande kommen soll.

Gemäß einem weiteren Aspekt der vorliegenden Erfindung erfolgt die Benutzereingabe des mobilen Endgeräts mittels eines Berührens einer berührungsempfindlichen Wiedergabeeinheit und/oder mittels einer Spracheingabe.

Dies hat den Vorteil, dass der Benutzer entweder auf seinem Display seinen Kommunikationspartner auswählen kann oder er kann in einem Auto eine Spracheingabe absetzen und sodann kann er sagen welcher der Kommunikationspartner gewählt werden soll.

Gemäß einem weiteren Aspekt der vorliegenden Erfindung liegt das mobile Endgerät des Benutzers als ein Telefon, eine elektronische Brille mit Benutzerschnittstelle und/oder ein Head-up-Display vor. Dies hat den Vorteil, dass unterschiedliche Hardware verwendet werden kann. So kann beispielsweise ein Benutzer eine elektronische Brille verwenden, welche Informationen in das Brillenglas einblenden kann. So erhält der Benutzer unterschiedliche Information bezüglich der Kommunikationspartner, welche ihn umgeben. Mittels einer weiteren Information kann dargestellt werden, welche Kommunikationspartner registriert sind. Darüber hinaus ist es oftmals möglich in ein Display innerhalb einer Brille ein Kamerabild einzublenden, welches sodann die Kommunikationspartner in der gewünschten Anzahl heran zoomt bzw. heraus zoomt.

Gemäß einem weiteren Aspekt der vorliegenden Erfindung wird der Kommunikationskanal unter Verwendung von Bluetooth, WLAN, einer Luftschnittstelle eines Mobilfunknetzes, einer Punkt zu Punkt Verbindung und/oder einer Telefonverbindung hergestellt. Dies hat den Vorteil, dass unterschiedliche Kommunikationstechniken Einsatz finden können und bei einem Ausfall einer ersten Kommunikationstechnik eine zweite Kommunikationstechnik verwendet wird. Auch können diese Techniken priorisiert werden und bei einem Ausfall einer verwendeten hoch priorisierten Technik, wird eine nachrangige Technik automatisch hinzugeschaltet.

Die Aufgabe wird auch gelöst durch eine Vorrichtung zur Konfiguration eines mobilen Endgeräts eines Benutzers bei einer semi-automatisierten Einrichtung eines Kommunikationskanals, aufweisend eine Ausleseeinheit eingerichtet zum stetigen Auslesen mindestens eines bildgebenden Sensors zum Erfassen einer Mehrzahl potentieller Kommunikationspartner, wobei mittels einer Konfigurationseinheit in Abhängigkeit einer voreingestellten Anzahl potentieller Kommunikationspartner ein Vergrößerungsfaktor mindestens eines Sensors der bildgebenden Sensoren eingestellt wird; eine Freischalteinheit eingerichtet zum Freischalten einer Auswahl an Kommunikationspartnern mittels einer bereitgestellten Registrierungsinformation; und eine Kommunikationsschnittstelle eingerichtet zum Einrichten eines Kommunikationskanals aus einer vordefinierten Mehrzahl an Kommunikationskanälen zu einem Endgerät des Kommunikationspartners gemäß einer hinterlegten Benutzer-ID bzw. Endgerätekennung eines freigeschalteten Kommunikationspartners in Abhängigkeit einer Benutzereingabe des mobilen Endgeräts des Benutzers.

Vergrößerungsfaktor und Zoomfaktor können vorliegend synonym verwendet werden.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein, solange diese in den Schutzbereich der Ansprüche fallen. Ebenso können die vorstehend genannten und die hier weiter ausgeführten Merkmale je für sich oder zu mehreren in beliebigen Kombinationen Verwendung finden, solange diese in den Schutzbereich der Ansprüche fallen. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:

Figur 1: ein schematisches Ablaufdiagramm des vorgeschlagenen Verfahrens zur Konfiguration eines mobilen Endgeräts eines Benutzers bei einer semi-automatisierten Einrichtung eines Kommunikationskanals gemäß einem Aspekt der vorliegenden Erfindung;

Figur 2: das Sichtfeld ausgehend von dem Benutzer und zeigt, dass der Sichtbereich horizontal und vertikal aufgeteilt wird, gemäß einem Aspekt der vorliegenden Erfindung; und

Figur 3: das Sichtfeld ausgehend von dem Benutzer gemäß einem Aspekt der vorliegenden Erfindung.

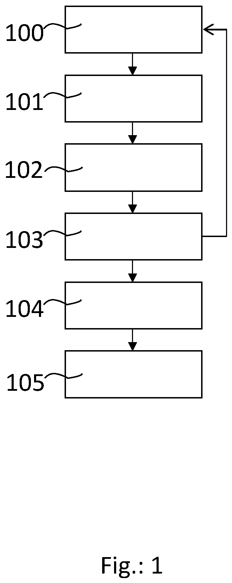

Figur 1 zeigt ein schematisches Ablaufdiagramm mit einem Verfahren zur Konfiguration eines mobilen Endgeräts eines Benutzers bei einer semi-automatisierten Einrichtung eines Kommunikationskanals, aufweisend ein stetiges Auslesen 100 mindestens eines bildgebenden Sensors zum Erfassen 102 einer Mehrzahl potentieller Kommunikationspartner, wobei in Abhängigkeit einer voreingestellten 101 Anzahl potentieller Kommunikationspartner ein Vergrößerungsfaktor mindestens eines Sensors der bildgebenden Sensoren eingestellt 103 wird; ein Freischalten 104 einer Auswahl an Kommunikationspartnern mittels einer bereitgestellten Registrierungsinformation; und ein Einrichten 105 eines Kommunikationskanals aus einer vordefinierten Mehrzahl an Kommunikationskanälen zu einem Endgerät des Kommunikationspartners gemäß einer hinterlegten Endgerätekennung eines freigeschalteten 104 Kommunikationspartners in Abhängigkeit einer Benutzereingabe des mobilen Endgeräts des Benutzers.

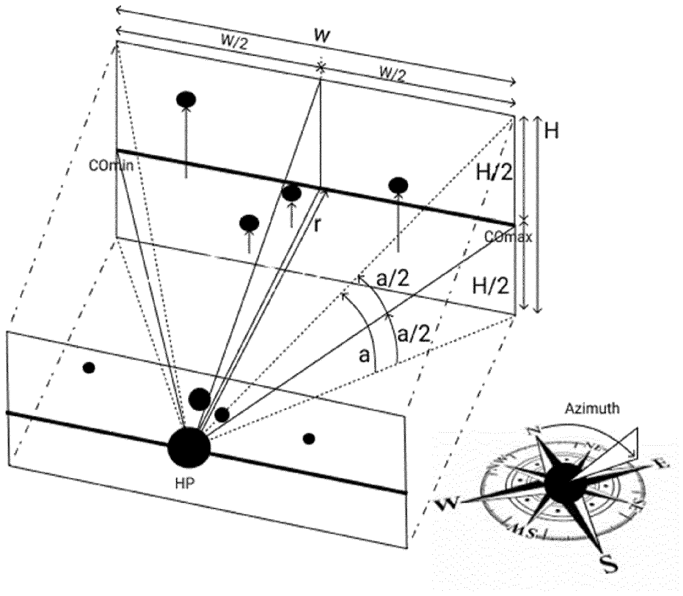

Figur 2 zeigt das Sichtfeld ausgehend von dem Benutzer unten und zeigt dass der Sichtbereich horizontal und vertikal aufgeteilt wird. Die virtuelle Mittellinie entspricht dem Azimutwinkel, also dem Winkel relativ zum Nordpol. Die Ermittlung der Ausrichtung, Himmelsrichtung, erfolgt mit dem Magnetometer bzw. Kompass. Die horizontale Mittellinie wird durch die vertikale Ausrichtung des Telefons bestimmt, diese wird mit Rotationssensoren und/ oder Neigungssensoren bestimmt.
Wobei

W = Weite des Sichtfeldes

W/2 = halbe Weite des Sichtfeldes

H = Höhe des Sichtfeldes

H/2 = halbe Höhe des Sichtfeldes

r = Abstand zur Kamera bzw. Home Position (Sichtfeld Radius)

a = vertikaler Öffnungswinkel der Kamera

a/2 = halber vertikaler Öffnungswinkel der Kamera

b = horizontaler Öffnungswinkel der Kamera

b/2 = halber horizontaler Öffnungswinkel der Kamera

COmin = Geo Koordinate Minimum

COmax = Geo Koordinate Maximum

HP = Home Position

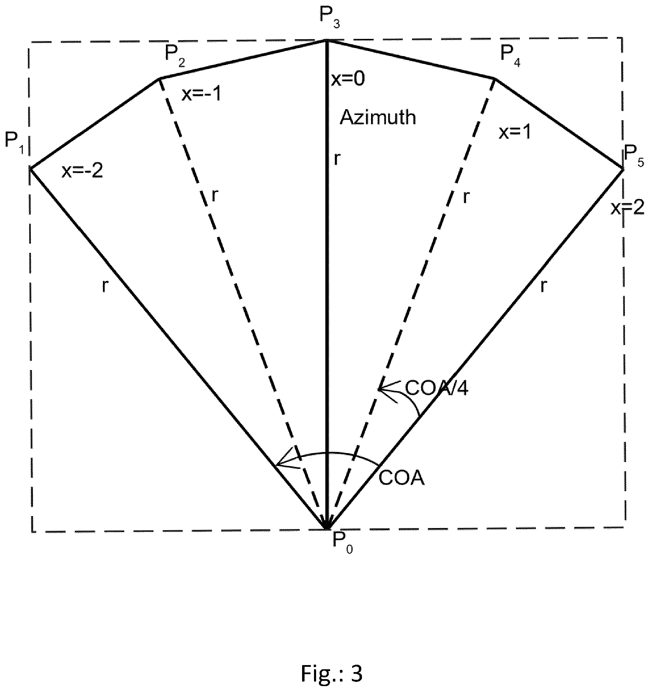

Figur 3 zeigt das Sichtfeld ausgehend von dem Benutzer. Um die Datenhaltung zu beschleunigen wird der Sichtbereich als geschlossenes Polygon abgebildet. Die Genauigkeit von Höhenangaben aus einem GPS Signal ist sehr stark von der Qualität des Empfangssignals und der Anzahl der empfangenen Satelliten abhängig.

Wenn vorhanden, wird das Signal des Luftdrucksensors, Barometer, zur Verbesserung der Höhenangabe verwendet. Da der Luftdruck am Ort der Zielperson ebenfalls bekannt ist, kann dessen Höhe nun in Bezug zur eigenen Höhe über den Luftdruck berechnet werden. Voraussetzung dafür ist Übertragung der Sensordaten, wie zum Beispiel Luftdruck und Temperatur, sowie GPS Position und Signalqualität an den Server.
Wobei

P0 = Home Position

P1...5 = Geo Koordinaten im Abstand r und Winkel (COA/4 * X) von P0 (Berechnung erfolgt gemäß WGS84 Georeferenz - System)

r = Sichtfeld Radius

X = Koordinaten Index

Azimut = Azimut Winkel

COA = horizontaler Kameraöffnungswinkel

COA/4 = ¼ des horizontalen Kameraöffnungswinkels

Berechnung der Polygon-Koordinaten:

$$P_{n[1...5]} = P_0. at\big(r, Azimuth + [x_{[-2...2]} * COA/4]\big)$$

Die Funktion "at()"[1]) berechnet die Koordinate ausgehend vom Punkt $P_0$ im Abstand von r und einem Azimut Winkel gemäß WGS84 Georeferenz - System.

$$Polygon = \{P_0, P_{n[n=1...5]}, P_0\}$$

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschla-gene Systemanordnung betreiben.

**EP 4 175 281 B1**

**Patentansprüche**

1. Verfahren zur Konfiguration eines mobilen Endgeräts eines Benutzers bei einer semi-automatisierten Einrichtung eines Kommunikationskanals, aufweisend:

   - ein stetiges Auslesen (100) mindestens eines bildgebenden Sensors zum Erfassen (102) einer Mehrzahl potentieller Kommunikationspartner;
   - ein Freischalten (104) einer Auswahl an Kommunikationspartnern mittels einer bereitgestellten Registrierungsinformation; und
   - ein Einrichten (105) eines Kommunikationskanals aus einer vordefinierten Mehrzahl an Kommunikationskanälen zu einem Endgerät des Kommunikationspartners gemäß einer hinterlegten Endgerätekennung eines freigeschalteten (104) Kommunikationspartners in Abhängigkeit einer Benutzereingabe des mobilen Endgeräts des Benutzers, **dadurch gekennzeichnet, dass** in Abhängigkeit einer voreingestellten (101) Anzahl potentieller Kommunikationspartner ein Vergrößerungsfaktor mindestens eines Sensors der bildgebenden Sensoren eingestellt (103) wird, wobei die voreingestellte Anzahl potentieller Kommunikationspartner in Abhängigkeit einer Auflösung einer Wiedergabeeinheit und einer prozentualen Bildschirmbelegung der Wiedergabeeinheit relativ spezifiziert wird.

2. Verfahren nach Anspruch 1, **dadurch gekennzeichnet, dass** mehrere bildgebende Sensoren ausgelesen werden und deren Bilder auf einer Wiedergabeeinheit kombiniert ausgegeben werden.

3. Verfahren nach Anspruch 1 oder 2, **dadurch gekennzeichnet, dass** das Erfassen der Kommunikationspartner in Abhängigkeit einer hinterlegten Registrierungsinformation, einer hinterlegten Bildinformation, in Abhängigkeit eines ausgelesenen Positionssensors, in Abhängigkeit eines Höhenmessers und/ oder in Abhängigkeit eines Luftdrucksensors erfolgt.

4. Verfahren nach einem der vorhergehenden Ansprüche, **dadurch gekennzeichnet, dass** die Anzahl potentieller Kommunikationspartner mit einer Auswahl aus drei bis 10 eingestellt wird.

5. Verfahren nach einem der vorhergehenden Ansprüche, **dadurch gekennzeichnet, dass** der Vergrößerungsfaktor derart eingestellt wird, dass die ausgelesenen potentiellen Kommunikationspartner genau der Anzahl der voreingestellten Anzahl potentieller Kommunikationspartner entspricht.

6. Verfahren nach einem der vorhergehenden Ansprüche, **dadurch gekennzeichnet, dass** eine Registrierungsinformation mindestens ein Bild, mindestens ein Muster, eine Information eines Nummernschilds, eine Gesichtsmerkmal, biometrische Daten und/ oder mindestens eine visuelle Benutzerkennung aufweist.

7. Verfahren nach einem der vorhergehenden Ansprüche, **dadurch gekennzeichnet, dass** die Mehrzahl an Kommunikationskanälen einen Audiokanal, einen Videokanal und/ oder einen textuellen Kommunikationskanal umfasst.

8. Verfahren nach einem der vorhergehenden Ansprüche, **dadurch gekennzeichnet, dass** die Endgerätekennung, eine Adresse, eine Telefonnummer, eine Benutzeridentität, Kontaktdaten und/ oder eine alphanummerische Zeichenkette umfasst.

9. Verfahren nach einem der vorhergehenden Ansprüche, **dadurch gekennzeichnet, dass** die Benutzereingabe des mobilen Endgeräts mittels eines Berührens einer berührungsempfindlichen Wiedergabeeinheit und/ oder mittels einer Spracheingabe erfolgt.

10. Verfahren nach einem der vorhergehenden Ansprüche, **dadurch gekennzeichnet, dass** das mobile Endgerät des Benutzers als ein Telefon, eine elektronische Brille mit Benutzerschnittstelle und/ oder ein Head-Up-Display vorliegt.

11. Verfahren nach einem der vorhergehenden Ansprüche, **dadurch gekennzeichnet, dass** der Kommunikationskanal unter Verwendung von Bluetooth, WLAN, einer Luftschnittstelle eines Mobilfunknetzes, einer Punkt zu Punkt Verbindung, einer WIFI direkt Verbindung und/ oder einer direkten WLAN Verbidung aufgebaut werden kann.

12. Vorrichtung zur Konfiguration eines mobilen Endgeräts eines Benutzers bei einer semi-automatisierten Einrichtung eines Kommunikationskanals, aufweisend:

- eine Ausleseeinheit eingerichtet zum stetigen Auslesen (100) mindestens eines bildgebenden Sensors zum Erfassen (102) einer Mehrzahl potentieller Kommunikationspartner;

- eine Freischalteinheit eingerichtet zum Freischalten (104) einer Auswahl an Kommunikationspartnern mittels einer bereitgestellten Registrierungsinformation; und

- eine Kommunikationsschnittstelle eingerichtet zum Einrichten (105) eines Kommunikationskanals aus einer vordefinierten Mehrzahl an Kommunikationskanälen zu einem Endgerät des Kommunikationspartners gemäß einer hinterlegten Endgerätekennung eines freigeschalteten (104) Kommunikationspartners in Abhängigkeit einer Benutzereingabe des mobilen Endgeräts des Benutzers, **dadurch gekennzeichnet, dass** mittels einer Konfigurationseinheit in Abhängigkeit einer voreingestellten (101) Anzahl potentieller Kommunikationspartner ein Vergrößerungsfaktor mindestens eines Sensors der bildgebenden Sensoren eingestellt (103) wird, wobei die voreingestellte Anzahl potentieller Kommunikationspartner in Abhängigkeit einer Auflösung einer Wiedergabeeinheit und einer prozentualen Bildschirmbelegung der Wiedergabeeinheit relativ spezifiziert wird.

**13.** Computerprogrammprodukt, umfassend Befehle, die bei der Ausführung des Programms durch mindestens einen Computer diesen veranlassen, die Schritte des Verfahrens nach einem der Ansprüche 1 bis 11 auszuführen.

**14.** Computerlesbares Speichermedium, umfassend Befehle, die bei der Ausführung durch mindestens einen Computer diesen veranlassen, die Schritte des Verfahrens nach einem der Ansprüche 1 bis 11 auszuführen.

**Claims**

**1.** A method of configuring a user's mobile terminal in a semi-automated communication channel setup, comprising:

- a continuous readout (100) of at least one imaging sensor for detecting (102) a plurality of potential communication partners;
- an activation (104) of a selection of communication partners by means of a provided registration information; and
- setting up (105) a communication channel from a predefined plurality of communication channels to a terminal of the communication partner in accordance with a stored terminal identifier of an enabled (104) communication partner as a function of a user input of the user's mobile terminal, **characterized in that** a magnification factor of at least one sensor of the imaging sensors is set (103) as a function of a preset (101) number of potential communication partners , the preset number of potential communication partners being specified relatively as a function of a resolution of a reproduction unit and a percentage screen occupancy of the reproduction unit.

**2.** The method according to claim 1, **characterized in that** several imaging sensors are read out and their images are output in combination on a reproduction unit.

**3.** The method according to claim 1 or 2, **characterized in that** the detection of the communication partners takes place as a function of a stored registration information, a stored image information, as a function of a read-out position sensor, as a function of an altimeter and/or as a function of an air pressure sensor.

**4.** The method according to one of the preceding claims, **characterized in that** the number of potential communication partners is set with a selection from three to 10.

**5.** The method according to one of the preceding claims, **characterized in that** the magnification factor is set in such a way that the potential communication partners read out corresponds exactly to the preset number of potential communication partners.

**6.** The method according to any one of the preceding claims, **characterized in that** registration information comprises at least one image, at least one pattern, information of a number plate, a facial feature, biometric data and/or at least one visual user ID.

**7.** The method according to any one of the preceding claims, **characterized in that** the plurality of communication channels comprises an audio channel, a video channel and/or a textual communication channel.

**8.** The method according to any one of the preceding claims, **characterized in that** the terminal identifier comprises an address, a telephone number, a user identity, contact details and/or an alphanumeric string.

9. The method according to one of the preceding claims, **characterized in that** the user input of the mobile terminal takes place by means of touching a touch-sensitive playback unit and/or by means of voice input.

10. The method according to any one of the preceding claims, **characterized in that** the user's mobile terminal is in the form of a telephone, electronic glasses with user interface and/or a head-up display.

11. The method according to any one of the preceding claims, **characterized in that** the communication channel can be established using Bluetooth, WLAN, a mobile network air interface, a point-to-point connection, a WIFI direct connection and/or a direct WLAN connection.

12. An apparatus for configuring a user's mobile terminal in a semi-automated setup of a communication channel, comprising:

    - a readout unit set up for continuously reading out (100) at least one imaging sensor for detecting (102) a plurality of potential communication partners;
    - an activation unit arranged to activate (104) a selection of communication partners by means of registration information provided; and
    - a communication interface set up for setting up (105) a communication channel from a predefined plurality of communication channels to a terminal of the communication partner in accordance with a stored terminal identifier of an enabled (104) communication partner as a function of a user input of the user's mobile terminal, **characterized in that** a magnification factor of at least one sensor of the imaging sensors is set (103) by means of a configuration unit as a function of a preset (101) number of potential communication partners , the preset number of potential communication partners being specified relatively as a function of a resolution of a reproduction unit and a percentage screen occupancy of the reproduction unit.

13. A computer program product comprising instructions which, when the program is executed by at least one computer, cause the computer to perform the steps of the method of any one of claims 1 to 11.

14. A computer-readable storage medium comprising instructions which, when executed by at least one computer, cause the computer to perform the steps of the method of any one of claims 1 to 11.

**Revendications**

1. Méthode de configuration du terminal mobile d'un utilisateur dans le cadre d'une configuration semi-automatique d'un canal de communication, comprenant :

    - une lecture continue (100) d'au moins un capteur d'images pour détecter (102) une pluralité de partenaires de communication potentiels ;
    - l'activation (104) d'une sélection de partenaires de communication au moyen d'une information d'enregistrement fournie ; et
    - établir (105) un canal de communication à partir d'une pluralité prédéfinie de canaux de communication vers un terminal du partenaire de communication conformément à un identifiant de terminal stocké d'un partenaire de communication activé (104) en fonction d'une entrée utilisateur du terminal mobile de l'utilisateur, **caractérisé en ce qu'**un facteur d'agrandissement d'au moins un capteur des capteurs d'imagerie est réglé (103) en fonction d'un nombre prédéfini (101) de partenaires de communication potentiels, le nombre prédéfini de partenaires de communication potentiels étant spécifié relativement en fonction d'une résolution d'une unité de reproduction et d'un pourcentage d'occupation de l'écran de l'unité de reproduction.

2. Procédé selon la revendication 1, **caractérisée par le fait que** plusieurs capteurs d'images sont lus et que leurs images sont produites en combinaison sur une unité de reproduction.

3. Procédé selon la revendication 1 ou 2, **caractérisée par le fait que** la détection des partenaires de communication se fait en fonction d'une information d'enregistrement stockée, d'une information d'image stockée, en fonction d'un capteur de position de lecture, en fonction d'un altimètre et/ou en fonction d'un capteur de pression d'air.

4. Procédé selon l'une des revendications précédentes, **caractérisée par le fait que** le nombre de partenaires de communication potentiels est fixé par une sélection de trois à 10.

**5.** Procédé selon l'une des revendications précédentes, **caractérisé par le fait que** le facteur d'agrandissement est réglé de manière à ce que les partenaires de communication potentiels lus correspondent exactement au nombre prédéfini de partenaires de communication potentiels.

**6.** Procédé selon l'une des revendications précédentes, **caractérisée par le fait que** les informations d'enregistrement comprennent au moins une image, au moins un motif, des informations relatives à une plaque d'immatriculation, une caractéristique faciale, des données biométriques et/ou au moins un identifiant visuel de l'utilisateur.

**7.** Procédé selon l'une des revendications précédentes, **caractérisé par le fait que** la pluralité de canaux de communication comprend un canal audio, un canal vidéo et/ou un canal de communication textuelle.

**8.** Procédé selon l'une quelconque des revendications précédentes, **caractérisé par le fait que** l'identifiant du terminal comprend une adresse, un numéro de téléphone, une identité d'utilisateur, des coordonnées et/ou une chaîne alphanumérique.

**9.** Procédé selon l'une des revendications précédentes, **caractérisé par le fait que** l'entrée de l'utilisateur du terminal mobile s'effectue par le toucher d'une unité de lecture tactile et/ou par l'entrée vocale.

**10.** Procédé selon l'une quelconque des revendications précédentes, **caractérisé par le fait que** le terminal mobile de l'utilisateur se présente sous la forme d'un téléphone, de lunettes électroniques avec interface utilisateur et/ou d'un affichage tête haute.

**11.** Procédé selon l'une des revendications précédentes, **caractérisée par le fait que** le canal de communication peut être établi en utilisant Bluetooth, WLAN, une interface aérienne de réseau mobile, une connexion point à point, une connexion WIFI directe et/ou une connexion WLAN directe.

**12.** Appareil permettant de configurer le terminal mobile d'un utilisateur dans le cadre d'une configuration semi-automatique d'un canal de communication, comprenant :

- une unité de lecture configurée pour lire en continu (100) au moins un capteur d'images pour détecter (102) une pluralité de partenaires de communication potentiels ;
- une unité d'activation conçue pour activer (104) une sélection de partenaires de communication au moyen des informations d'enregistrement fournies ; et
- une interface de communication configurée pour établir (105) un canal de communication à partir d'une pluralité prédéfinie de canaux de communication vers un terminal du partenaire de communication conformément à un identifiant de terminal stocké d'un partenaire de communication activé (104) en fonction d'une entrée utilisateur du terminal mobile de l'utilisateur, **caractérisé par le fait qu'**un facteur d'agrandissement d'au moins un capteur des capteurs d'imagerie est réglé (103) au moyen d'une unité de configuration en fonction d'un nombre prédéfini (101) de partenaires de communication potentiels, le nombre prédéfini de partenaires de communication potentiels étant spécifié relativement en fonction d'une résolution d'une unité de reproduction et d'un pourcentage d'occupation de l'écran de l'unité de reproduction.

**13.** Produit de programme informatique comprenant des instructions qui, lorsque le programme est exécuté par au moins un ordinateur, amènent l'ordinateur à exécuter les étapes de la méthode de l'une des revendications 1 à 11.

**14.** Un support de stockage lisible par ordinateur comprenant des instructions qui, lorsqu'elles sont exécutées par au moins un ordinateur, amènent ce dernier à exécuter les étapes de la méthode décrite dans l'une des revendications 1 à 11.

Fig.: 1

Fig.: 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015214744 B4
- DE 112014005165 T5
- US 20100173678 A1